# FASCICULE DE BREVET EUROPEEN

(11) **EP 2 808 605 B1**
(45) Date de publication et mention de la délivrance du brevet: **09.12.2015**
(21) Numéro de dépôt: 13169974.6
(22) Date de dépôt: 31.05.2013
(51) Int. Cl.: F23B 90/06, F23G 5/027, F23M 11/00

(54) **Procédé de sécurisation d'un équipement de combustion industrielle**
Sicherungsverfahren einer industriellen Verbrennungsanlage
Method for securing an industrial combustion device

(43) Date de publication de la demande: 03.12.2014
(73) Titulaire: Veolia Energia Slovensko, a.s., 85101 Bratislava (SK)
(72) Inventeur: ROGE, Christophe, 83101 Bratislava (SK)
(74) Mandataire: Novagraaf Technologies

(56) Documents cités:
- EP-A1- 1 079 178
- EP-A2- 0 863 216
- US-A1- 2004 045 272
- US-A1- 2004 261 670
- US-A1- 2007 297 881

## Description

La présente invention concerne le domaine des équipements de combustion pour centrale industrielle, et en particulier la sécurisation de tels équipements.

Au sens de la présente invention, un équipement de combustion comprend typiquement une chambre de combustion, une chambre de gazéification, plus communément appelée « gazéificateur » ou « gazéifieur », et une conduite de liaison reliant les deux chambres entre elles.

Le gazéificateur est utilisé pour produire en régime stabilisé un gaz de synthèse à haute température, en l'espèce à partir de biomasse, de bois ou autre combustible. Ce gaz de synthèse est injecté comme carburant dans la chambre de combustion par la conduite de liaison.

La chambre de combustion est alimentée par un comburant comprenant de l'oxygène, typiquement de l'air. L'énergie thermique produite par la combustion est ensuite réutilisée comme énergie de chauffage ou transformée, typiquement en électricité.

Par exemple, l'énergie thermique produite par une chaudière alimentée en gaz de synthèse est envoyée sous forme de vapeur surchauffée dans un turbo vapeur produisant de l'électricité en mode cogénération et/ou condensation. En mode cogénération la chaleur récupérée en sortie du turbo vapeur peut être utilisée sur la zone industrielle ou pour le chauffage d'une ville.

Les réactions chimiques en jeu dans le gazéificateur pour créer le gaz de synthèse sont telles qu'elles ne peuvent être arrêtées instantanément. Il existe un délai entre l'instant de décision d'arrêter la combustion, qui revient en général à arrêter la flamme dans la chambre de combustion et/ou à arrêter la gazéification, et l'arrêt effectif de celle-ci.

Pendant ce délai, le processus de gazéification se poursuit et il existe un risque d'explosion non contrôlée,
- par fuite de gaz de synthèse vers la chambre de combustion alimentée en comburant, ou inversement
- par fuite de comburant réchauffé par les réfractaires de la chambre de combustion vers le gazéificateur contenant un gaz de synthèse potentiellement porté à une température suffisamment élevée pour initier une explosion.

Pour limiter ces risques, il est connu d'équiper la conduite de liaison d'une double vanne de sectionnement mécanique. En fonctionnement, la double vanne de sectionnement est ouverte pour permettre l'écoulement du gaz de synthèse du gazéificateur vers la chambre de combustion. A l'arrêt, la double vanne de sectionnement est fermée. Un tel agencement est connu, par example, du document EP 0 863 216 A2.

Cependant, dans les conditions d'exploitation, la fiabilité des vannes de sectionnement et plus particulièrement celles à grosses sections de passage employées dans le cas présent, n'est pas toujours garantie dans le temps du fait des contraintes auxquelles ces vannes de sectionnement sont exposées.

En effet, pour simplifier, le gaz de synthèse est généré à une température comprise entre 200 et 600°C. En réalité, en régime stabilisé, il peut apparaitre des régimes transitoires ou la température du gaz de synthèse décroit vers 80°C, lors d'un chargement d'une grosse quantité de biomasse dans un gazéificateur notamment. La chambre de combustion peut être portée à une température d'environ 1 200 °C et rayonne directement sur les vannes. Du fait des températures rencontrées, une déformation mécanique des vannes peut donc se produire lors d'une erreur d'exploitation, par exemple si la double vanne de sectionnement est maintenue fermée alors que la chambre de combustion est portée à haute température par le brûleur de démarrage au gaz naturel.

D'autre part, une accumulation de dépôts de goudrons issus de la gazéification de biomasse et déposés par condensation, de poussières, de cendres, de charbon de bois sur les parois de la conduite de liaison peut perturber la fermeture de la double vanne de sectionnement de sorte que celle-ci ne soit plus totalement étanche. Des phénomènes de corrosion peuvent aussi engendrer des problèmes de fermeture de la double vanne ou d'étanchéité.

L'étanchéité totale de la double vanne doit être assurée pour éviter qu'une flamme ne soit entretenue ou éviter la formation d'une poche de gaz susceptible d'exploser si les conditions d'inflammabilité sont réunies.

Ainsi, la double vanne de sectionnement risque de ne plus être totalement étanche par corrosion, par déformation mécanique liée aux températures d'utilisation, par accumulation de dépôts, ou par la combinaison d'au moins deux de ces trois facteurs. Et tout risque de perte d'étanchéité augmente le risque d'explosion non contrôlée.

La présente invention vise à remédier à ces inconvénients en proposant un procédé visant à palier à une défaillance de la fermeture de la double vanne.

Avec cet objectif en vue, l'invention concerne un procédé de sécurisation d'un équipement de combustion (10) pour centrale thermique industrielle ou de cogénération, comprenant des étapes consistant à :
- produire (100) un gaz de synthèse (13) dans une chambre de gazéification (11),
- amener (110) le gaz de synthèse (13) produit dans une chambre de combustion (12) par une conduite de liaison (14) équipée d'une double vanne de sectionnement (15),
- générer (120) une combustion dans la chambre de combustion (12) de l'équipement avec le gaz de synthèse (13) comme carburant, et
- commander (130) ultérieurement la fermeture de la double vanne de sectionnement (15),

Il est essentiellement **caractérisé en ce qu'il** comprend en outre des étapes consistant à :
- détecter (140) une erreur de fermeture de la double vanne de sectionnement (15), et dans l'affirmative,
- injecter (150) une surpression de gaz inerte dans la conduite de liaison (14).

Dans un mode de réalisation, l'étape (150) consistant à injecter une surpression de gaz inerte comprend l'injection de vapeur d'eau.

Dans un mode de réalisation, l'étape (150) consistant à injecter une surpression de gaz inerte comprend la commande de l'activation d'un ramoneur rétractable (19), c'est à dire l'injection du gaz inerte par l'intermédiaire dudit ramoneur.

Dans un mode de réalisation, l'étape (150) consistant à injecter une surpression de gaz inerte comprend la commande de l'activation d'un ou plusieurs points d'injection directe de gaz inerte équipant la conduite de liaison (14).

Dans un mode de réalisation, l'étape (140) consistant à détecter une erreur de fermeture de la double vanne de sectionnement (15) comprend la détection d'une erreur de fermeture de chaque vanne de la double vanne de sectionnement (15).

Dans un mode de réalisation, le procédé comprend une étape consistant à équiper chaque vanne de la double vanne de sectionnement (15) d'un détecteur de fermeture.

Dans un mode de réalisation, le procédé comprend une étape consistant à équiper la conduite de liaison (14) d'un détecteur de fermeture par vanne de la double vanne de sectionnement (15).

Selon un autre de ses objets, l'invention porte également sur un programme d'ordinateur, comprenant des instructions de code de programme pour l'exécution des étapes d'un procédé tel que défini ci-avant lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation d'un équipement de combustion, et
- la figure 2 illustre un mode de réalisation du procédé selon l'invention.

Une centrale thermique industrielle ou une centrale de cogénération comprend un équipement de combustion 10.

L'équipement de combustion 10 comprend une chambre de gazéification 11 qui permet de générer un gaz de synthèse 13, c'est à dire de convertir des matières carbonées ou organiques qui y ont été déposées, par exemple du bois, de la paille ou de la biomasse, en gaz de synthèse 13 par gazéification, à des températures comprises dans un ensemble allant de 200°C à 600°C voire 650°C.

La chambre de gazéification 11 est classiquement équipée d'une vanne de sécurité 16, ou by-pass, qui s'ouvre automatiquement lorsque la pression dans la chambre de gazéification 11 devient supérieure à une valeur de pression prédéfinie. Dans ce cas, le gaz de synthèse 13 produit est typiquement rejeté dans l'atmosphère par une première cheminée 17.

La chambre de combustion 12 est équipée d'une deuxième cheminée 18 ouverte sur l'atmosphère. En sortie de la chambre de combustion, les gaz brûlés sont généralement dirigés vers des vaporisateurs, surchauffeurs, économiseurs, réchauffeurs d'air, électrofiltres et en dernier vers un récupérateur de la chaudière pour finalement être évacués à l'atmosphère, grâce à un ventilateur de tirage, au travers d'une cheminée (18), en l'espèce de 200 mètres de haut. Au pied de cette cheminée (18) se trouvent des registres permettant d'isoler la chaudière du tirage de la cheminée en cas de nécessité (la chaudière étant à l'arrêt bien entendu).

Le gaz de synthèse 13 produit dans la chambre de gazéification 11 est amené de la chambre de gazéification 11 dans une chambre de combustion 12 par une conduite de liaison 14 équipée d'une double vanne de sectionnement 15.

Par double vanne de sectionnement 15, ci-après double vanne par concision, on entend deux vannes de sectionnement montée en série et solidaires en translation ou en rotation. Elle est manuelle ou pilotée et permet lors de conditions de fonctionnement normales d'assurer l'étanchéité entre la chambre de gazéification 11 et la chambre de combustion 12 lorsqu'elle est en position fermée. En l'espèce, les deux vannes sont commandées par des vérins pneumatiques.

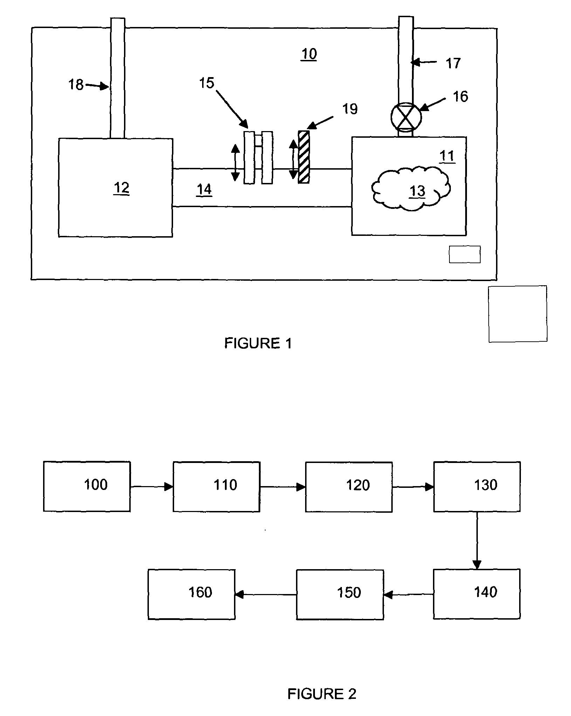

La double vanne de sectionnement 15 est mobile, en l'espèce dans un sens transversal à la conduite de liaison 14, comme illustré par la flèche double sur la figure 1.

On prévoit également un extracteur (non illustré) piloté, en l'espèce un ventilateur, situé par exemple dans la chambre de combustion 12 ou dans la conduite de liaison 14, en aval de la double vanne dans le sens d'écoulement normal du gaz de synthèse 13, pour amener le gaz de synthèse 13 de la chambre de gazéification 11 à la chambre de combustion 12 par la conduite de liaison 14. En l'espèce, l'extracteur est un ventilateur de tirage situé en sortie de la chaudière après les électrofiltres et avant le récupérateur et la cheminée 18. Celui-ci pousse vers la cheminée 18 les gaz brulés portés à environ 150-180°C lorsque ceux-ci le traversent.

Dans la chambre de combustion 12, le gaz de synthèse 13 fait office de carburant et il est mélangé à un comburant, typiquement de l'air.

Un brûleur non illustré initie et entretient la combustion dans la chambre de combustion 12. En l'espèce un brûleur au gaz naturel initie la combustion et l'entretient jusqu'à ce que la flamme générée dans la chambre de combustion soit jugée stationnaire par un dispositif de détection de flamme dédié. Une fois en régime établi, le brûleur au gaz naturel est arrêté.

Celui-ci peut être redémarré en cas de détection flamme de la chambre de combustion jugée trop faible. L'énergie thermique produite par la combustion est ensuite transformée de façon connue en soi.

La pression dans la chambre de combustion 12 est mesurée par un capteur de pression.

La pression dans la chambre de gazéification 11 peut être mesurée par un capteur de pression ou contrôlée par la pression mesurée dans la conduite de liaison 14 à un point situé juste en aval de la double vanne de sectionnement 15 et couplée au pilotage de l'extracteur.

En phase de production industrielle, la pression dans la chambre de gazéification 11 est supérieure à la pression dans la chambre de combustion 12. La double vanne est en position ouverte. Le gaz de synthèse 13, qui est combustible, est alors extrait de la chambre de gazéification 11 et amené dans la chambre de combustion 12 grâce à l'extracteur, ce qui permet d'entretenir la combustion.

Pour arrêter la combustion, par exemple en cas d'urgence, on prévoit de commander la fermeture de la double vanne, en l'espèce par un signal de commande des vérins pneumatiques.

La fermeture de la double vanne coupe l'arrivée de gaz de synthèse 13 dans la chambre de combustion 12 et la flamme dans la chambre de combustion 12 est coupée.

Cependant, dans la chambre de gazéification 11, l'arrêt du processus de gazéification n'est pas immédiat et celui-ci se poursuit après la commande de fermeture de la double vanne, typiquement pendant plusieurs heures pendant lesquelles le gaz de synthèse 13 continue d'être produit et est, dans ce cas, évacué par la première cheminée 17.

Dans le cas d'un arrêt normal, on arrête l'alimentation de la biomasse dans les gazéificateurs et la combustion est arrêtée une fois que les gazéificateurs sont vides (on redémarre les brûleurs gaz naturel en fin de combustion de la biomasse dans les gazéificateurs).

En cas d'arrêt d'urgence, les doubles vannes de sectionnement sont fermées et le gaz de synthèse est alors évacué vers la cheminée 17.

Comme exposé précédemment, si la fermeture de la double vanne n'est pas totale, il existe un risque d'explosion non contrôlée.

Ce pourquoi, on prévoit une étape consistant à détecter une erreur de fermeture de la double vanne.

Une erreur de fermeture de la double vanne est considérée comme détectée si une erreur de fermeture de chaque vanne de la double vanne est détectée.

Par exemple, chaque vanne de la double vanne est équipée d'un détecteur de fermeture, par exemple un capteur de pression et en l'espèce un capteur de fin de course.

Alternativement, on peut prévoir un détecteur de fermeture par vanne, installés dans la conduite de liaison 14.

Si aucune erreur de fermeture n'est détectée, l'arrêt de la combustion se poursuit de façon connue en soi.

Lorsqu'une erreur de fermeture est détectée, on prévoit alors d'injecter une surpression de gaz inerte dans la conduite de liaison 14.

Par gaz inerte, on entend un gaz inerte au regard de la combustion, c'est à dire ne comprenant pas de comburant, en l'espèce l'oxygène. On peut prévoir d'injecter de l'azote, du dioxyde de carbone, de l'argon, etc. ou un mélange à base de l'un au moins de ces gaz. En l'espèce, on prévoit d'injecter de la vapeur d'eau, dont l'avantage réside notamment en ce qu'il existe toujours un circuit d'eau sur le site industriel, la vapeur d'eau étant créée par exemple en utilisant la température de combustion.

Par surpression, on entend que le gaz inerte est injecté à une pression supérieure à la pression dans la chambre de gazéification 11, et supérieure à la pression dans la chambre de combustion 12.

Ainsi, la surpression de gaz inerte dans la conduite de liaison 14 fait office de barrage dans la conduite de liaison 14 ; elle empêche d'une part le gaz de synthèse 13 d'être amené dans la chambre de combustion 12, et d'autre part le comburant réchauffé par les réfractaires de la chambre de combustion 12 d'être amené dans la chambre de gazéification 11.

Le débit et la durée pendant laquelle la surpression de gaz inerte est injectée dépendent par exemple des pertes de charges de la conduite de liaison 14 (géométrie, diamètre, longueur, rugosité...) et du stade de développement du processus de gazéification (plus il y a de biomasse dans le gazéificateur, plus le temps nécessaire pour que cette biomasse se gazéifiée et finisse par brûler et s'éteindre par manque de carbone est long).

Avantageusement, cette vapeur d'eau de barrage permet également de contenir la montée en température autour du point d'injection.

Une explosion est initiée par la combinaison en un point donné d'une source de chaleur suffisante, et d'un mélange de carburant et de comburant.

Le barrage de vapeur permet à la fois d'éviter le mélange de carburant (gaz de synthèse 13) et de comburant (oxygène de la chambre de combustion 12) ; et d'éviter une montée en température.

Grâce à l'invention, le risque de formation d'un point chaud susceptible d'initier une explosion est donc considérablement réduit.

Comme évoqué précédemment, une accumulation préjudiciable de dépôts de goudrons, cendres, charbon de bois, poussières peut s'effectuer dans la conduite de liaison 14. Les goudrons sont formés typiquement au cours de l'arrêt ou au démarrage (voir également en régime transitoire) de l'installation, par condensation des vapeurs d'hydrocarbures lourds contenus dans le gaz de synthèse 13, lors d'un abaissement de la température dudit gaz en dessous d'un seuil de 200 - 250°C.

Ce pourquoi la plupart des équipements de combustion fonctionnant sur la base de gazéification de la biomasse comprennent également un ramoneur, en l'espèce un ramoneur à vapeur d'eau, dit ramoneur vapeur 19. Ce ramoneur est généralement installé du côté du gazéificateur en amont des vannes de sectionnement dans le sens d'écoulement du gaz de synthèse 13. Il est rétractable en l'espèce mobile dans un sens transversal à la conduite de liaison 14, comme illustré par la flèche double sur la figure 1.

Un ramonage à la vapeur régulier des vannes de sectionnement permet de re-volatiliser les hydrocarbures lourds et ainsi combattre l'accumulation des goudrons chargés en cendres. Ce ramoneur est mis en service régulièrement quelle que soit la température car il permet également de chasser les particules telles que les cendres, charbon de bois, poussières...

Avantageusement, on peut prévoir d'injecter le gaz inerte dans la conduite de liaison 14 par l'intermédiaire d'un ramoneur vapeur 19. En l'espèce, en cas de détection simultanée de défaut de fermeture des deux vannes de sectionnement montée en série, le ramoneur est positionné à l'aide d'un moteur électrique au centre de la conduite de liaison 14 et l'injection de vapeur d'eau est initiée afin de former le barrage de vapeur sécurisant l'équipement de combustion 10.

On peut aussi prévoir alternativement ou en combinaison, d'équiper la conduite de liaison 14 d'un dispositif d'injection directe de gaz inerte, pour injecter le gaz inerte directement dans la conduite de liaison 14 en un ou plusieurs points d'injection.

Dans un mode de réalisation, on peut prévoir qu'en cas de détection de non fermeture simultanée des deux vannes de la double vanne de sectionnement, l'injection de vapeur est déclenchée et en même temps, que le ventilateur de tirage est arrêté et que les registres permettant d'isoler la chaudière du tirage de la cheminée soient fermés. Ainsi, la pression dans la chambre de combustion est portée au niveau de la pression atmosphérique (le tirage de la cheminée et le ventilateur de tirage maintenant une dépression dans la chambre de combustion). On renforce ainsi l'efficacité du bouchon vapeur dans le sens du gazéificateur vers la chambre de combustion en créant une pression supérieure dans la chambre de combustion.

Pour un niveau de pression égale dans le gazéificateur et dans la chambre de combustion, la probabilité que de l'air chaud provenant de la chambre de combustion passe au travers le bouchon vapeur vers le gazéificateur est plus faible que l'inverse car des registres placés sur les conduites d'air secondaire nécessaire à la combustion sont également fermés lors de détection de non fermeture simultanée des deux vannes de la double vanne de sectionnement. Dans ce cas, par la fermeture de ces registres et de ceux en pied de la cheminée, nous réduisons considérablement le risque d'avoir un taux d'oxygène élevé dans la chaudière, seules des gaz brûlés y seront présents.

Dans un example qui fait pas partie de l'invention, l'homme du métier comprend que la double vanne peut être remplacée par une simple vanne. Dans ce cas, la détection d'un défaut de fermeture de cette unique vanne déclenche l'injection de gaz inerte

## Revendications

1. Procédé de sécurisation d'un équipement de combustion (10) pour centrale thermique industrielle ou de cogénération, comprenant des étapes consistant à :
- produire (100) un gaz de synthèse (13) dans une chambre de gazéification (11),
- amener (110) le gaz de synthèse (13) produit dans une chambre de combustion (12) par une conduite de liaison (14) équipée d'une double vanne de sectionnement (15),
- générer (120) une combustion dans la chambre de combustion (12) de l'équipement avec le gaz de synthèse (13) comme carburant, et
- commander (130) ultérieurement la fermeture de la double vanne de sectionnement (15),
**caractérisé en ce que** le procédé comprend en outre des étapes consistant à :
- détecter (140) une erreur de fermeture de la double vanne de sectionnement (15), et dans l'affirmative,
- injecter (150) une surpression de gaz inerte dans la conduite de liaison (14).

2. Procédé selon la revendication 1, dans lequel l'étape (150) consistant à injecter une surpression de gaz inerte comprend l'injection de vapeur d'eau.

3. Procédé selon l'une quelconque des revendications précédentes, dans lequel l'étape (150) consistant à injecter une surpression de gaz inerte comprend la commande de l'activation d'un ramoneur rétractable.

4. Procédé selon l'une quelconque des revendications précédentes, dans lequel l'étape (150) consistant à injecter une surpression de gaz inerte comprend la commande de l'activation d'un ou plusieurs points d'injection directe de gaz inerte équipant la conduite de liaison (14).

5. Procédé selon l'une quelconque des revendications précédentes, dans lequel l'étape (140) consistant à détecter une erreur de fermeture de la double vanne de sectionnement (15) comprend la détection d'une erreur de fermeture de chaque vanne de la double vanne de sectionnement (15).

6. Procédé selon l'une quelconque des revendications précédentes, comprenant une étape consistant à équiper chaque vanne de la double vanne de sectionnement (15) d'un détecteur de fermeture.

7. Procédé selon l'une quelconque des revendications précédentes, comprenant une étape consistant à équiper la conduite de liaison (14) d'un détecteur de fermeture par vanne de la double vanne de sectionnement (15).

8. Programme d'ordinateur, comprenant des instructions de code de programme pour l'exécution des étapes du procédé selon l'une quelconque des revendications 1 à 5, lorsque ledit programme est exécuté sur un ordinateur.

## Patentansprüche

1. Verfahren zum Sichern eines Brennersystems (10) eines industriellen Wärmekraftwerks oder Blockheizkraftwerks, die folgenden Schritte umfassend:
- Erzeugen (100) eines Synthesegases (13) in einer Vergasungskammer (11),
- Beibringen (110) des Synthesegases (13), das in einer Brennkammer (12) erzeugt wird, durch einen Verbindungskanal (14), der mit einem Doppelabsperrventil (15) ausgestattet ist,
- Erzeugen (120) einer Verbrennung der Ausrüstung in der Brennkammer (12) mit dem Synthesegas (13) als Kraftstoff, und
- Späteres Steuern (130) des Verschlusses des Doppelabsperrventils (15),
**dadurch gekennzeichnet, dass** das Verfahren darüber hinaus die folgenden Schritte umfasst:
- Erkennen (140) eines Schließfehlers des Doppelabsperrventils (15), und im Bestätigungsfall,
- Injizieren (150) eines Intertgases mit Überdruck in den Verbindungskanal (14).

2. Verfahren nach Anspruch 1, wobei der Schritt (150), der aus dem Injizieren eines Intertgases mit Überdruck besteht, das Injizieren von Wasserdampf umfasst.

3. Verfahren nach irgendeinem der vorherigen Ansprüche, wobei der Schritt (150), der aus dem Injizieren eines Intertgases mit Überdruck besteht, das Steuern der Aktivierung einer einziehbaren Reinigungsbürste umfasst.

4. Verfahren nach irgendeinem der vorherigen Ansprüche, wobei der Schritt (150), der aus dem Injizieren eines Intertgases mit Überdruck besteht, das Steuern der Aktivierung eines oder mehrerer Direktinjektionsstellen von Inertgas umfasst, mit denen der Verbindungskanal (14) ausgestattet ist.

5. Verfahren nach irgendeinem der vorherigen Ansprüche, wobei der Schritt (140), der aus dem Erkennen eines Schließfehlers des Doppelabsperrventils (15) besteht, das Erkennen eines Schließfehlers eines jeden Ventils des Doppelabsperrventils (15) umfasst.

6. Verfahren nach irgendeinem der vorherigen Ansprüche, einen Schritt umfassend, der darin besteht, jedes Ventils des Doppelabsperrventils (15) mit einem Schließsensor auszustatten.

7. Verfahren nach irgendeinem der vorherigen Ansprüche, einen Schritt umfassend, der darin besteht, den Verbindungskanal (14) mit einem Schließsensor je Ventil des Doppelabsperrventils (15) auszustatten.

8. Computerprogramm, Programmcodebefehle zum Ausführen der Schritte des Verfahrens nach irgendeinem der Ansprüche 1 bis 5 umfassend, wenn das besagte Programm auf einem Computer ausgeführt wird.

## Claims

1. Method for securing a piece of combustion equipment (10) for industrial power plant or CHP, comprising steps of:
- producing (100) a synthesis gas (13) in a gasification chamber (11),
- conveying (110) the synthesis gas (13) produced in a combustion chamber (12) by a connecting line (14) provided with a double block valve (15),
- generating (120) a combustion in the combustion chamber (12) of the equipment with the synthesis gas (13) as fuel, and
- subsequently controlling (130) the closing of the double block valve (15)
**characterised in that** the method further comprises the steps of:
- detecting (140) a closing error of the double block valve (15), and if so,
- injecting (150) an inert gas pressure into the connecting line (14).

2. Method according to claim 1, wherein the step (150) of injecting an inert gas pressure includes injecting steam.

3. Method according to any of the preceding claims, wherein the step (150) of injecting an inert gas overpressure comprises controlling the activation of a retractable sweep.

4. Method according to any of the preceding claims, wherein the step (150) of injecting an inert gas overpressure comprises controlling of the activation of one or more points of the direct injection of inert gas provided on the driving link (14).

5. Method according to any of the preceding claims, wherein the step (140) of detecting a closing error of the double block valve (15) includes detecting a closing error of each closure valve of the double block valve (15).

6. Method according to any one of the preceding claims, comprising a step of providing each valve of the double block valve (15) with a closure detector.

7. Method according to any one of the preceding claims, comprising a step of providing the connecting line (14) of a valve closing detector of the double block valve (15).

8. Computer program comprising program code instructions for executing the steps of the method according to any one of claims 1 to 5 when said program is executed on a computer.
